# EUROPEAN PATENT APPLICATION

(11) **EP 1 544 590 A1**
(43) Date of publication of application: **22.06.2005**
(21) Application number: 02807840.0
(22) Date of filing: 18.09.2002
(51) Int. Cl.: G01N 1/00, G01N 35/10

(54) **DEVICE FOR SUCKING LIQUID AND METHOD FOR SUCKING LIQUID**

(71) Applicant: Hitachi High-Technologies Corporation, Tokyo 105-8717 (JP)
(72) Inventor: Shoji, Yoshiyuki, c/o Naka Div. Design & Manufac., Hitachinaka-shi, Ibaraki 312-8504 (JP); Yokobayashi, Toshiaki, Naka Div. Design & Manufac., Hitachinaka-shi, Ibaraki 312-8504 (JP)
(74) Representative: Strehl Schübel-Hopf & Partner
(86) International application number: PCT/JP2002/009555
(87) International publication number: WO 2004/027390

(57) **Abstract**

When a plurality of liquids are simultaneously sucked using a plurality of suction paths connected to a single pump, one suction end may hinder other acts of suction. A multiple valve for connecting each suction path and the pump in a one-by-one manner is disposed between the plurality of suction paths and the pump. Suction is conducted while the communication between the suction paths and the pump is successively switched in a time-sharing manner. At a certain period of time, the pump and a given path is independent of other suction paths. Whereby, suction can be conducted without being influenced by suction ends of other suction paths.

## Description

### TECHNICAL FIELD

The present invention relates to an apparatus (a device) for sucking a plurality of liquids and a method thereof. For example, the present invention is applied to an apparatus for extracting nucleic acid that sucks a biological sample, such as blood, urine, or the like, held in a plurality of containers and to a method thereof.

### BACKGROUND ART

Concerning prior art for sucking biological samples, JP Patent Publication (Kokai) No. 5-45365 A (1993) discloses the following technology, for example. First, a plurality of probes held in a single holding portion are simultaneously lowered into the inside of a plurality of sample containers, and a sample surface in the inside of each sample container is detected. Then, when the plurality of probes reach the highest sample surface, the probes are halted for a moment. While the plurality of probes are stationary, the reached probe sucks a sample. After the suction is ended, the plurality of probes are lowered again. When the probes reach the second highest sample surface, the plurality of probes are halted again for a moment. While the plurality of probes are stationary, a prescribed probe sucks a sample. By successively repeating such steps, the sample is sucked from a prescribed sample container.

In many cases, biological samples have different physical characteristics, such as viscosity depending on the types of samples. Such differences may have an influence on the process time and the performance of an apparatus that sucks samples. For example, if samples pass through a fluid resistor, difference in the passage time thereof is generated on the basis of different physical properties. This varies the movement time of each sample and causes the suction processing time of each sample to fluctuate, thereby causing inconvenience where the suction of only one sample is finished and the suction of other samples is not completed.

### DISCLOSURE OF THE INVENTION

The present invention relates to an apparatus for sucking liquid, comprising a switching valve for successively switching the communication between a plurality of liquid suction portions and a pump. At a certain time, the pump is in communication with only a specific liquid suction portion. Thus, suction is not influenced by the conditions of other liquid suction portions. For example, suction can be conducted without being influenced even when the suction of other liquid suction portions is finished. And, the suction processing times of each liquid suction portion do not widely differ, since switching is carried out at predetermined intervals.

Also, the present invention relates to an apparatus for sucking liquid, comprising chambers that are each disposed in the plurality of liquid suction portions, and a pump for reducing the pressure thereof. After each chamber is depressurized, liquid is sucked with communication between each chamber and the liquid-introducing portions. Thus, suction can be conducted regardless of the conditions of other liquid-introducing portions.

In the following, the novel features and effects as mentioned above and other features regarding the present invention are described with reference to the drawings. In the present specification, terms are defined as follows.

The term "communication" means a state generated by functionally binding two liquid-processing mechanisms, whereby liquid is capable of being moved.

The term "liquid suction portion" means a portion of a prescribed system (machinery, system, or the like), which is a section provided with a function for taking a liquid material into a system. It is not a prerequisite that the liquid suction portion is exposed to the atmosphere, and may be physically connected to other systems (apparatus, machinery, or the like).

### BRIEF DESCRIPTION OF THE DRAWINGS

Fig. 1 schematically shows a liquid suction mechanism in embodiment 1.
Fig. 2 shows an overall perspective view of a nucleic acid extracting apparatus.
Fig. 3 shows a cross-sectional view of a tip used for nucleic acid extraction.
Fig. 4 shows a cross-sectional view of an example of a modified tip used for nucleic acid extraction.
Fig. 5 schematically shows an illustration of a chamber.
Fig. 6 shows a perspective view of an example of a modified chamber.
Fig. 7 shows a block diagram of a liquid suction mechanism in embodiment 1.
Fig. 8 shows an operation flow diagram of a liquid suction operation in embodiment 1.
Fig. 9 schematically shows a multiple valve.
Fig. 10 schematically shows a perspective view of a rotation valve as a component of the multiple valve.
Fig. 11 schematically shows a liquid suction mechanism in embodiment 2.
Fig. 12 shows a block diagram of the liquid suction mechanism in embodiment 2.
Fig. 13 shows an operation flow diagram of a liquid suction operation in embodiment 2.
Fig. 14 schematically shows a liquid suction mechanism in embodiment 3.
Fig. 15 shows a block diagram of the liquid suction mechanism in embodiment 3.
Fig. 16 shows an operation flow diagram of a liquid suction operation in embodiment 3.
Fig. 17 schematically shows a liquid suction mechanism in embodiment 4.
Fig. 18 shows a block diagram of the liquid suction mechanism in embodiment 4.
Fig. 19 shows an operation flow diagram of a liquid suction operation in embodiment 4.

### BEST MODE FOR CARRYING-OUT OF THE INVENTION

### (Embodiment 1)

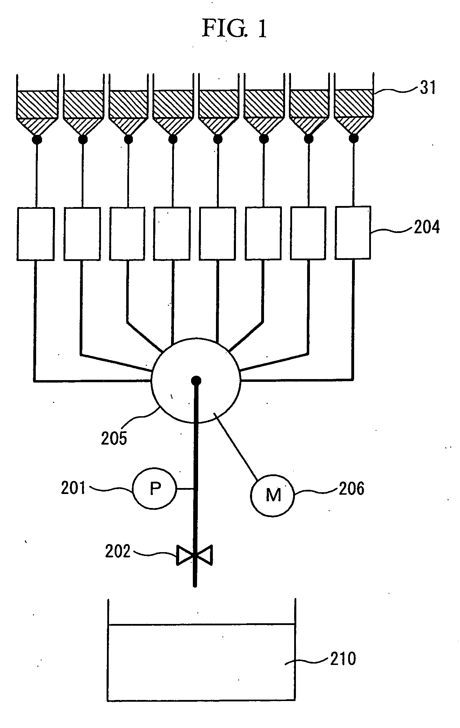

In the following, an apparatus for sucking liquid according to the present embodiment is described with reference to Figs. 1 to 10. The apparatus for sucking liquid in the present embodiment is an apparatus for extracting nucleic acid that utilizes a tip having a nucleic acid capturing carrier.

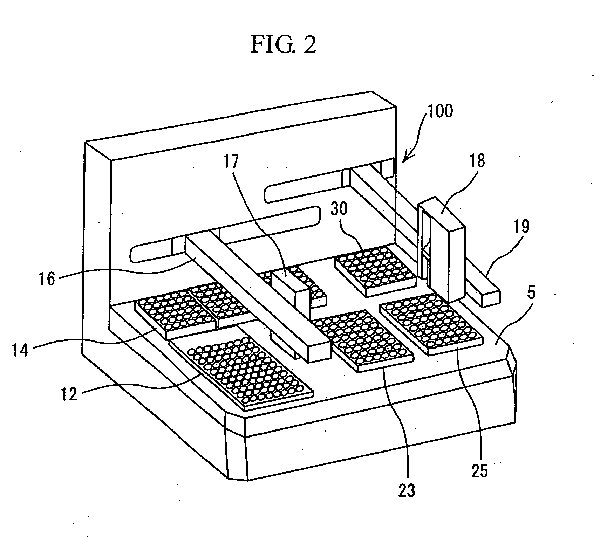

Fig. 2 shows the overall view of the apparatus for extracting nucleic acid, including a suction apparatus. In the present apparatus, two movable arms 16 and 19, both of which are capable of moving independently, are attached to a casing 100. A dispenser nozzle 17 for sucking and discharging samples is attached to the movable arm 16. In the same manner, a robot arm 18 for dispensing samples is attached to the movable arm 19. On an operation table 5, a tip rack 14, in which a plurality of types of tips for nucleic acid extraction, sample suction, and reagent suction are arranged, is disposed. The tips are used by the dispenser nozzle 17 and the robot arm 18.

A sample, such as whole blood, urine, blood serum, or the like, can be disposed on a sample rack 12. Reaction containers 23 and 25 are containers for causing a reaction of reagent with a sample. The temperature of each container is controlled in order to conduct reactions more stably, and each temperature has a different value. A plurality of types of reagents are disposed on a reagent disposition portion 30 and the reagent disposition portion 30 has a cooling function for preventing the degradation of sample.

Fig. 1 schematically shows the suction mechanism. The suction mechanism in the present embodiment comprises nucleic acid capturing containers 31, chambers 204, a multiple valve 205, and a pump unit 201. A plurality, such as 96, of nucleic acid capturing containers 31 and chambers 204, are in communication via relatively thin channels. Also, all chambers 204 and the multiple valve 205 are in communication via relatively thick channels.

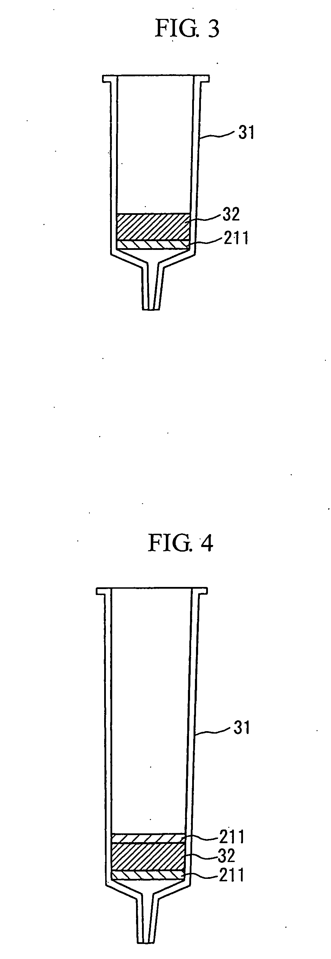

Fig. 3 schematically shows the nucleic acid capturing container 31. The nucleic acid capturing container 31 is a container for holding a sample including nucleic acid. Its form may be tubular, cup-shaped, tip-shaped, or the like, as long as it has a capacity for containing a carrier for capturing nucleic acid and sample suction inside the container. In the present embodiment, a tip-shaped container is used. The nucleic acid capturing container 31 can hold a sample including nucleic acid and capture nucleic acid by causing the sample including nucleic acid to pass a carrier member 32. Also, a disposable method that allows disposal after each single use is adopted.

A container body is a tubular member provided with two openings. One of the openings is tapered and is connected to a channel via a seal member. A sample held in the container is sucked from this opening. Another opening is almost the same size as the internal diameter of the container body and a sample is dispensed into the container from this opening.

Inside the container, the carrier member 32 for capturing nucleic acid and a holding fixture 211 for supporting it are disposed in the neighborhood of the tapered opening. The carrier member 32 generally comprises materials of silica or glass, and is used in a fiber form or a filter form. The present embodiment employs a carrier member, the filter form of which is prepared by sintering glass. However, glass wool, a magnetic bead, or the like can also be used. The holding fixture 211 is somewhat larger than the internal diameter of the nucleic acid capturing container 31 and is a discoid plate having some openings. The holding fixture 211 is fixed in the container by being pressed into the container. After the tapered opening is directed downward, sample is injected from the upper opening. A highly viscous sample, such as blood, is held on the carrier member 32 without flowing, since the carrier member 32 has high fluid resistance.

The nucleic acid capturing container 31 is connected to a channel of the suction mechanism via a seal member in order to maintain airtightness. A seal member is also disposed on a top surface. However, when the nucleic acid capturing container is used as in the present embodiment, a dispenser nozzle is inserted into the top portion of the nucleic acid capturing container 31 and fixed therein because the nucleic acid capturing container 31 is moved. In this case, the same state can be realized by closing the valve on the dispenser nozzle side. Moreover, if the dispenser nozzle employs a pump, such as a syringe pump, for example, which is not in communication with the atmosphere, the valve operations are unnecessary. In the case of those types of containers into which a pin is not inserted, the top surface of the container is pressed by a planar member capable of sealing.

When a sample is sucked, the tapered opening is directed downward, and it is connected to a channel leading to a chamber. Suction is initiated from the tapered opening, while the opening of the top surface is covered by a cover and the internal airtightness is maintained. Then, the sample is caused to pass through the carrier member 32 by depressurization, and is then moved to the outside of the container via the openings of the holding fixture 211.

The tapered opening, the carrier member 32, and the holding fixture 211 can involve large fluid resistance. Thus, time required for sample suction is different in accordance with the physical characteristics of a given sample, especially the viscosity thereof.

Fig. 4 schematically shows an example of a modified nucleic acid capturing container 31. Unlike the aforementioned container, it is used when a sample is sucked from down to up. Although the basic structure is the same as that shown in Fig. 3, the holding fixture 211 is also disposed above the carrier member 32, since liquid is caused to move from down to up. The container body has a longer shape as compared with the container in Fig. 3. This is because a long connecting portion is necessary in order to maintain the airtightness of the connected location between the container and the apparatus body, if suction is conducted upward.

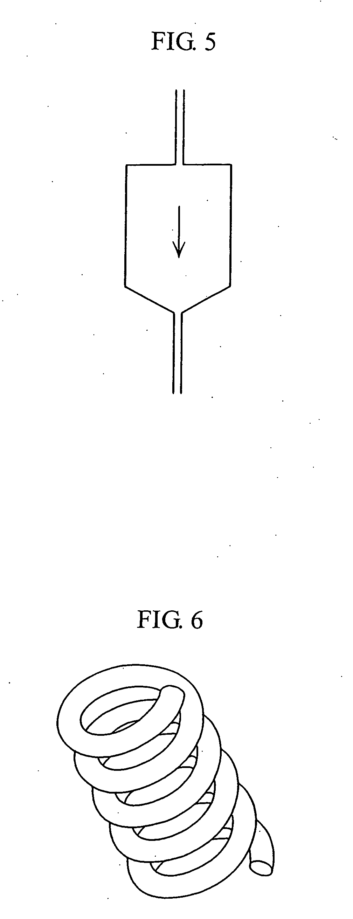

Figs. 5 and 6 schematically show chambers. A chamber 204 has a larger capacity than the volume of a sample to be sucked. The capacity of the chamber 204 must be sufficient so as to reduce the influence of disturbance, such as involving the viscosity of a sample. For example, in the present invention, the capacity is about ten times the volume of a sample. The chamber shown in Fig. 5 has a tapered shape in the lower portion thereof in order to cause a highly viscous sample to move smoothly, if the nucleic acid capturing container 31 shown in Fig. 3 is used. Also, Fig. 6 schematically shows a spiral-shaped chamber. It is constructed using a pipe employed as a channel in the present apparatus in a spiral manner. This enables the construction of a chamber without using a special member.

Each chamber is disposed in accordance with the nucleic acid capturing container 31, and is in communication with the nucleic acid capturing container 31 and the multiple valve 205 via channels. The channel from the nucleic acid capturing container 31 to the chamber 204 has an internal diameter smaller than the internal diameter of the channel from the pump unit 201, such as about ϕ 1, for example. This can reduce time for the channel to achieve sufficient negative pressure.

The multiple valve 205 is a valve to communicate a specific channel to the pump unit 201. The multiple valve 205 is driven by a motor 206, and the aforementioned communication is successively switched by rotation. By operating the suction mechanism 201 and the multiple valve 205, the pressure inside of the channel connected to the nucleic acid capturing container 31 becomes negative via the chamber 204. Since a sample in the nucleic acid capturing container 31 is contained in a state such that it is mixed with various types of reagent, generally, it is in a highly viscous state. Thus, when the operation of the aforementioned pump unit 201 and the multiple valve 205 is initiated, the suction of a sample is not immediately initiated, and the sample remains until the negative pressure in the suction apparatus becomes not less than a certain level. When the negative pressure in the suction apparatus becomes not more than a certain level, the sample is caused to pass through the carrier 32 for capturing nucleic acid (see Figs. 3 and 4), and is sucked into the suction mechanism. After the sample is sucked to a certain extent, it is possible to dispose of the sample using its own weight by halting the pump unit 201, since the channel from the chamber 204 to the multiple valve 205 has a sufficiently large internal diameter. This is also a desirable operation in terms of power saving. The internal diameter may be about ϕ 4, for example. In order to conduct suction in a shorter time, the pump unit 201 may be continuously operated until the suction of the sample in the nucleic acid capturing container 31 is finished.

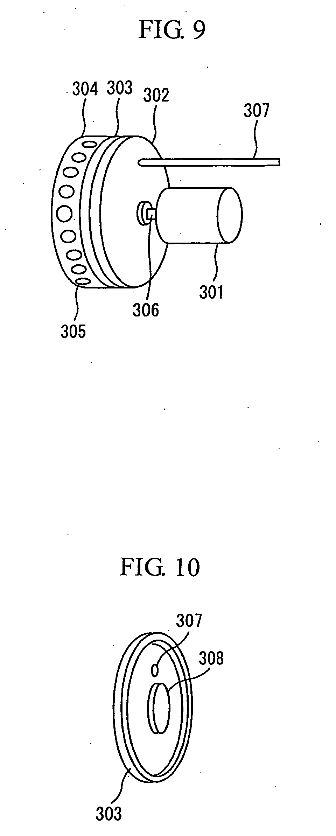

Fig. 9 schematically shows the multiple valve. The multiple valve 205 is a rotation valve, and is connected to chambers via a plurality of channels and to the pump via a single channel. The constitution of the multiple valve comprises a channel 307 for connecting the pump 201, a fixed valve 302 for connecting the channel 307, a rotation valve 303 connected to the motor 206 via a rotation axis 306, and a fixed valve 304 having a multitude of switching channels 305 for each channel. The multiple valve 205 is driven by the motor 206.

Fig. 10 schematically shows the rotation valve 303. The rotation valve 303 has the channel 307 in communication with the fixed valve 304, and communicates between a given switching channel 305 and the channel 307 by rotation. By rotating the rotation valve via the motor 206, each switching channel 305 can successively become in communication with the channel 307 in a time-sharing manner. In other words, by driving the multiple valve 205, the pump 201 instantaneously becomes in communication with each chamber 204. By driving the pump unit 201 in this state, each chamber can be continuously depressurized in a successive manner. Although this operation is conducted successively, the number of channels (chambers) communicating with the pump unit 201 is one at a given moment. Thus, the suction pressure of one channel (chamber) is not influenced by the state of other channels, so that each channel can be involved in suction using an equal pressure. Even when sample suction in one container is finished and the fluid resistance of the channel system thereof is substantially reduced, the suction of other channel systems is not influenced. Thus, samples held in a plurality of containers can be sucked exhaustively. The multiple valve according to the present invention achieves an object function by repeated valve rotation to communicate with a specific channel. However, it is possible to realize the same function by disposing a valve, such as an electromagnetic valve, for example, in each channel.

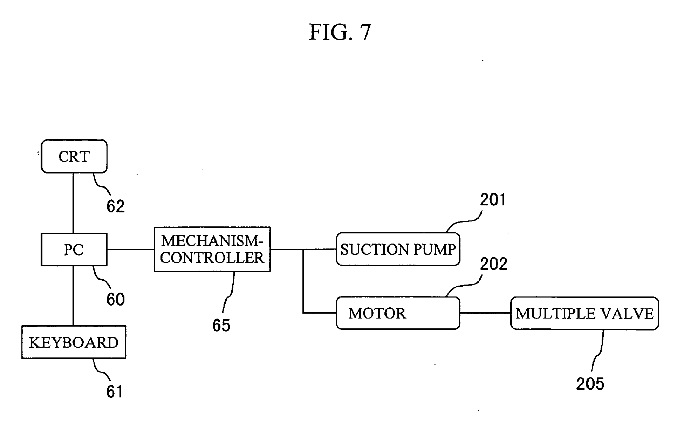

Fig. 7 shows a block diagram of an electric system of the present apparatus. A personal computer (PC) 60 as a operation-controller comprises a keyboard 61 as an operation panel for inputting operation conditions and detection information, a CRT 62 as a display apparatus for displaying input information, warning information, and the like, and a mechanism-controller 65 for controlling each mechanism of the apparatus, in a connected manner. The mechanism-controller 65 controls the operations of the pump 201 for sucking a sample and the motor 206 for driving the multiple valve 205. Whereby, each mechanism of the apparatus, such as the pump 201 and the multiple valve 205, for example, can be controlled in accordance with prescribed conditions or an operator's operation.

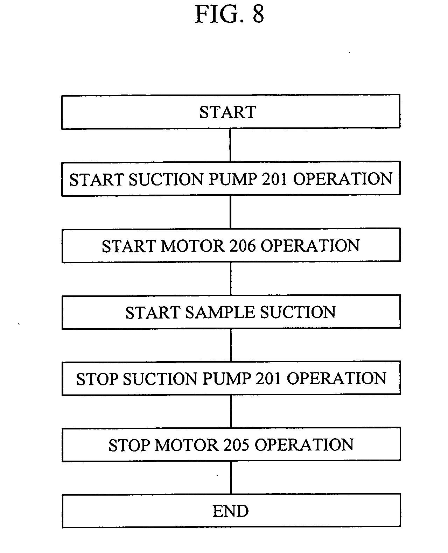

Fig. 8 shows a flow diagram of a suction operation of the present apparatus. In the following, the suction operation of the present apparatus is described. It is assumed that a sample to be sucked is already held in the nucleic acid capturing container 31 by the dispenser nozzle 17 and the robot arm 18.

First, the pump unit 201 and the motor 206 are operated. The multiple valve is driven via the rotation of the motor 206, and channels for suction are successively switched. Although the motor 206 may be of any type, such as an AC motor, a DC motor, or a pulse motor, a type capable of changing speed is desirable.

Since the multiple valve structurally passes a portion that divides two channels when switching from a given channel to the next channel, the cross section of the channel temporarily becomes small. Consequently, if the rotation speed of the motor 206 is too slow, the load of the pump unit 201 becomes large. In contrast, if the speed is too fast, the abrasion of an airtight surface is accelerated. Thus, depending on the materials of the multiple valve and the number of connected channels, an optimal speed must be selected for the rotation speed of the motor 206, which is about several dozens to several hundreds of rotations per minute.

Also, as mentioned above, the multiple valve structurally passes the portion that divides two channels when switching from a given channel to the next channel. However, a plurality of channels can simultaneously experience suction on the contrary. In this case, by minimizing the portion that originally serves as a divider of the channels, it becomes possible to achieve simultaneous suction for a channel that is currently experience suction and a channel that will experience suction next. This decreases the reduction of the cross section regarding the channels, so that the load on the pump unit 201 can be reduced, thereby more freely controlling the motor 206 for driving the multiple valve.

Further, in the present invention, the chamber 204 is disposed between the nucleic acid capturing container 31 and the multiple valve. This is because the suction of a sample could be conducted with a sufficient degree of margin by disposing a chamber whose capacity is larger than the volume of a sample. The suction of a channel including the chamber 204 is initiated by the operation of the pump unit 201. As mentioned above, since a sample in the nucleic acid capturing container 31 is contained in a state such that it is mixed with various types of reagent, generally, it is in a highly viscous state. Thus, when the operation of the aforementioned pump unit 201 and the multiple valve 205 is initiated, the suction of a sample is not immediately initiated, and the sample remains until the negative pressure in the suction apparatus becomes not more than a certain level. When the negative pressure in the suction apparatus becomes not less than a certain level, the sample is caused to pass through the carrier 32 for capturing nucleic acid, and is sucked into the suction mechanism. In the process where the sample is being sucked, the pressure inside the channel gradually reaches atmospheric pressure. However, stable suction with a low degree of pressure fluctuation can be realized by employing a volume sufficiently larger than that of the sample for the channel.

After the suction, it is necessary to wash the channel in order to prevent the contamination of the sample. After the nucleic acid capturing container 31 is moved, a disposable tip is attached to the dispenser nozzle 17, and washing reagent disposed inside the reagent disposition portion 30 is sucked to be discharged into the channel. After the sample discharge, the washing reagent is sucked by operating the pump unit 201 and the motor 206 in the same manner as the suction of the sample.

Waste fluid collected inside a single channel 34 is caused to communicate with the waste fluid container 210 by operating an electromagnetic valve 202 for waste fluid after the pump unit 201 is halted. The waste fluid is removed by its own weight, since the diameter of the channel merged in a singular manner is sufficiently large. Sufficient cross-section area is secured for a channel following the chamber, so that the sample naturally falls. Air blow can be conducted by connecting a pump for discharging to the top portion of the chamber in order to further actively cause the sample to fall.

Next, cleaning liquid is injected into the nucleic acid capturing container 31 and the cleaning liquid is sucked in the same manner as in the aforementioned adsorption step. The nucleic acid capturing container 31 in which the washing of a carrier portion for capturing nucleic acid is finished is moved to a position whereby the next step is conducted, using moving means (not shown in the drawings) such as a robot arm, or a manual method. After the nucleic acid capturing container 31 is moved, reagent for washing a channel is discharged into the channel by a dispensing mechanism (not shown in the drawings) or a manual method so as to wash the channel. By conducting the adsorption step in the same manner as in the suction operation, the inner channel is washed, thereby preventing contamination.

In the present embodiment, the conditions of one container do not have an influence on the suction of other containers. Therefore, suction can be conducted even if sample is not injected into all the containers. Also, the suction performance of other containers is not reduced even when the suction of one container is finished.

### (Embodiment 2)

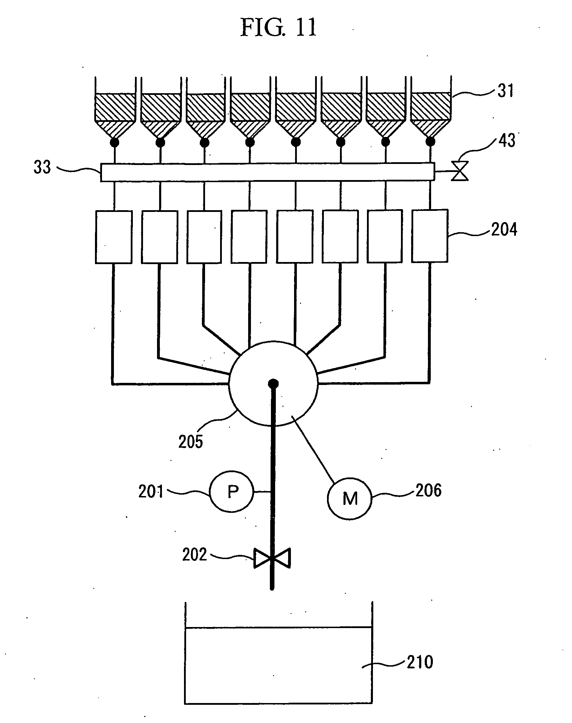

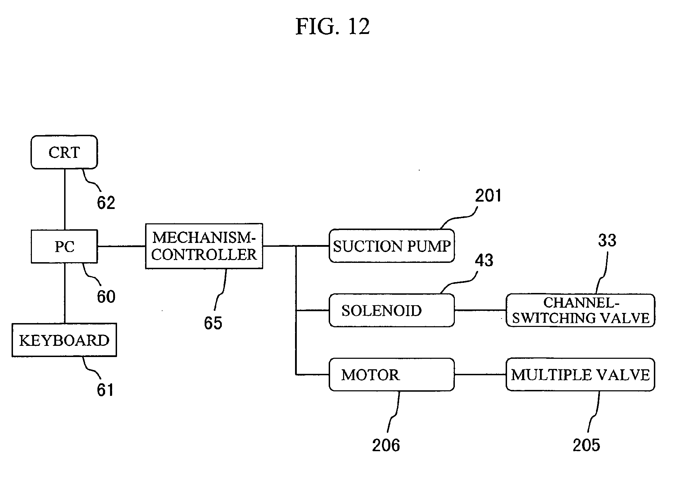

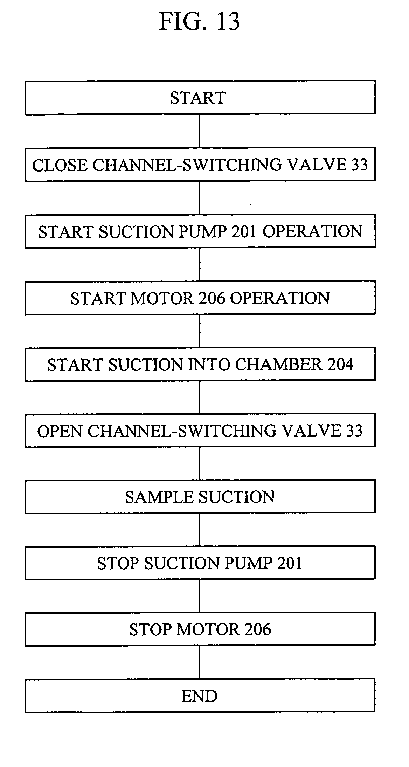

In the present embodiment, an apparatus for sucking liquid comprises a switching valve, namely, a channel-switching valve 33 disposed between the chamber 204 and the nucleic acid capturing container 31. Fig. 11 schematically shows a suction apparatus in the present embodiment. Fig. 12 shows a block diagram of the present embodiment. Fig. 13 shows an operation flow diagram. In the following, the difference from embodiment 1 is mainly described with reference to Figs. 11 to 13.

A suction mechanism in the present embodiment comprises the nucleic acid capturing container 31, the chamber 204, multiple valve 205, the pump unit 201, and the channel-switching valve 33. A plurality of nucleic acid capturing containers 31 and chambers 204 are in communication via relatively thin channels. The channel-switching valve 33 is disposed on the channels. Also, each chamber 204 and the multiple valve 205 are in communication via relatively thick channels.

The channel-switching valve 33 is a valve for opening/closing each channel, and is driven by a solenoid 43. As in embodiment 1, the channel to the chamber 204 employs a relatively small internal diameter, such as about ϕ 1, for example, in order to reduce time for the channel to achieve negative pressure. In the present embodiment, although the valve enabling the opening/closing of each channel in a collective manner is driven by a single solenoid, it is possible to dispose a plurality of valves and solenoids and control each thereof independently. A unit for driving the channel-switching valve 33 is not limited to a solenoid, so that a motor, for example, can be used.

In the present embodiment, the channel-switching valve 33 is set in a closed state, and the channel on the sample side is completely set in an obstructed state. Then, by operating the pump unit 201 and the motor 206, the channel and the chamber 204 are depressurized such that the pressure is not more than a certain pressure, such as not more than -0.5. In the present embodiment, it is possible to control the channel such that the pressure is negative, before the nucleic acid capturing container 31 is disposed. After the nucleic acid capturing container 31 is disposed, by setting the channel-switching valve 33 to an open state, a sample can be sucked in a short time. The opening of the channel-switching valve 33 may not occur simultaneously regarding each nucleic acid capturing container, so that control may be conducted individually. When the suction is to be conducted in a shorter time, although the pump unit 201 can be continuously operated without halt, the pump unit 201 can also be halted after the channel-switching valve 33 is opened, since the pressure of the inside of the channel can be sufficiently negative in advance. In this case, it is possible not to cause the sample to pass the pump unit 201. In this case, the prevention of clogging the reagent in the pump unit 201 and extending the operation life of the pump unit 201 are possible.

In the present embodiment, it is possible to inject sample into the container and depressurize the chamber individually in an independent manner. Thus, processing time for the conditions of the suction step can be reduced.

### (Embodiment 3)

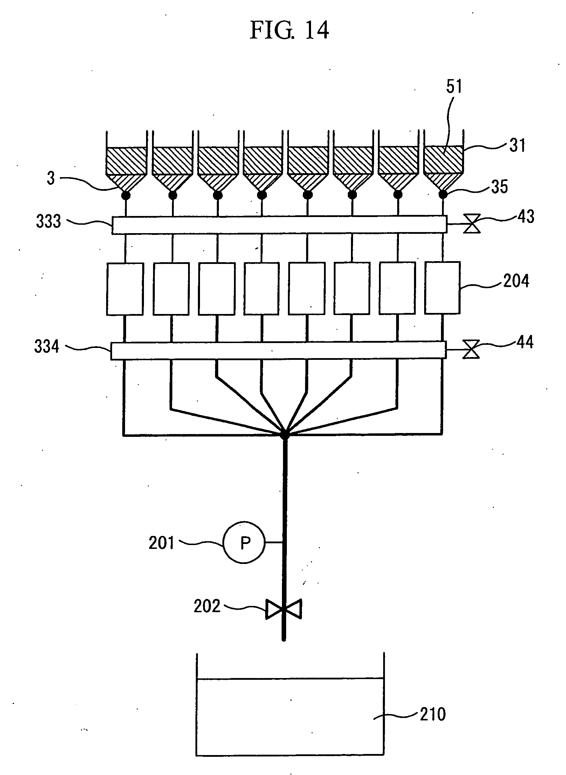

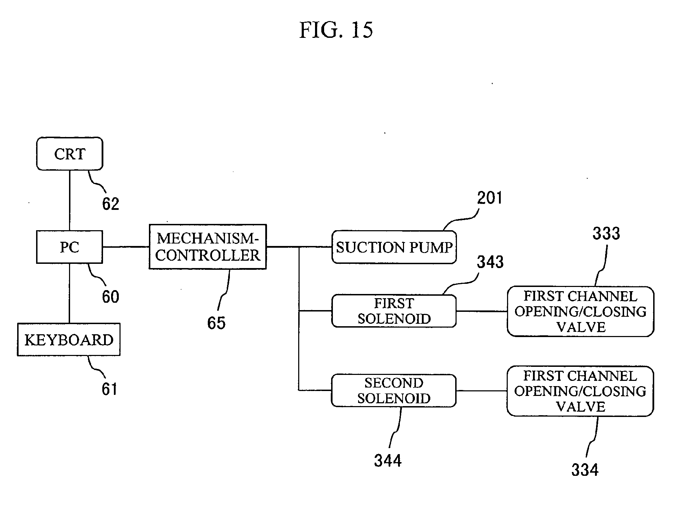

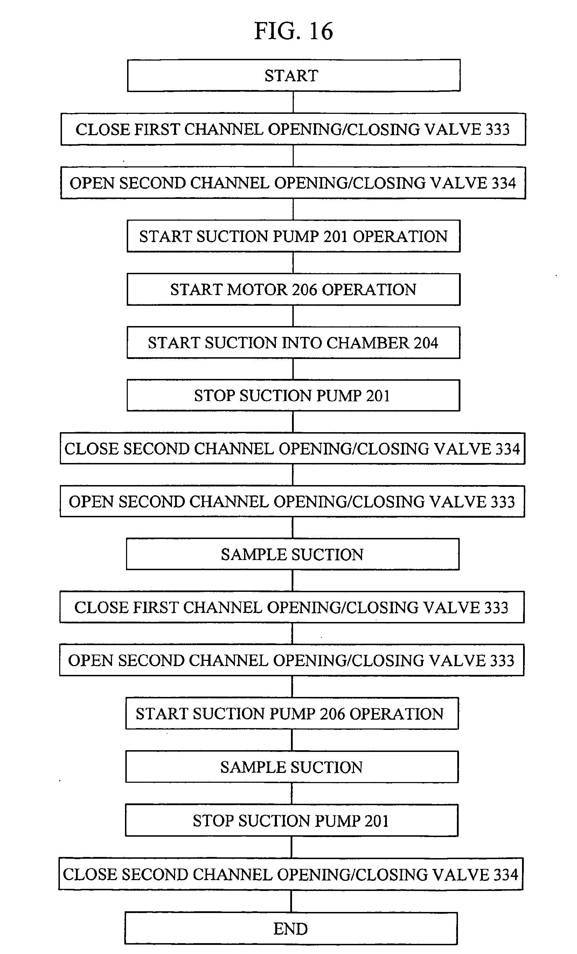

In the present embodiment, an apparatus for sucking liquid comprises channel opening/closing valves on both ends of a chamber. Fig. 14 schematically shows the present embodiment, Fig. 15 shows a block diagram of the present embodiment, and Fig. 16 shows an operation flow diagram. In the following, with reference to Figs. 14 to 16, the features of the present embodiment are described as compared with embodiments 1 and 2.

In the present apparatus, the chambers 204 are disposed for a plurality of nucleic acid capturing containers 31. Channels from each chamber 204 are joined into a single channel and the channel is in communication with the suction motor 201. A first channel opening/closing valve 333 for enabling the control of communication is disposed between the nucleic acid capturing container 31 and the chamber 204. Also, a second channel opening/closing valve 334 is disposed between the chamber 204 and a location where the channels are joined.

The first channel opening/closing valve 333 is driven by a first solenoid 343 and can simultaneously control the communication between each nucleic acid capturing container 31 and each chamber 204. Also, the second channel opening/closing valve 334 is driven by a second solenoid 344 and can simultaneously control the communication between each chamber 204 and the location where the channels are joined. In both valves, the concrete structures thereof, for example, are the same as the channel opening/closing valve in embodiment 2. Moreover, they can have a structure such that they each conduct communication control.

The suction pump 201, the first channel opening/closing valve 333, and the second channel opening/closing valve 334 are controlled via a mechanism controller 65. The following suction operation is conducted.

First, the first channel opening/closing valve 333 is closed and the second channel opening/closing valve 334 is opened, so that each chamber 204 is set in a state where depressurization is possible. Then, the chamber 204 is depressurized by driving the suction pump 201 until the inside of the chamber 204 achieves a certain pressure. Also, a sample 51 is dispensed into the nucleic acid capturing container 31 independently of the suction operation.

After the suction pump 201 is halted, the first channel opening/closing valve is closed. Then, the second channel opening/closing valve is opened and the sample is sucked into the chamber 204.

Thereafter, the first channel opening/closing valve is closed, the second channel opening/closing valve is opened, and the suction pump 206 is driven. Whereby, the sample in the chamber 204 is sucked and removed, and the chamber 204 is emptied.

Finally, the suction pump 206 is halted and the second channel opening/closing valve 344 is closed, thereby completing the suction operation.

### (Embodiment 4)

In the present embodiment, an apparatus for sucking liquid comprises a channel opening/closing valve between a nucleic acid capturing container and a chamber, and a check valve on the opposite side of each thereof.

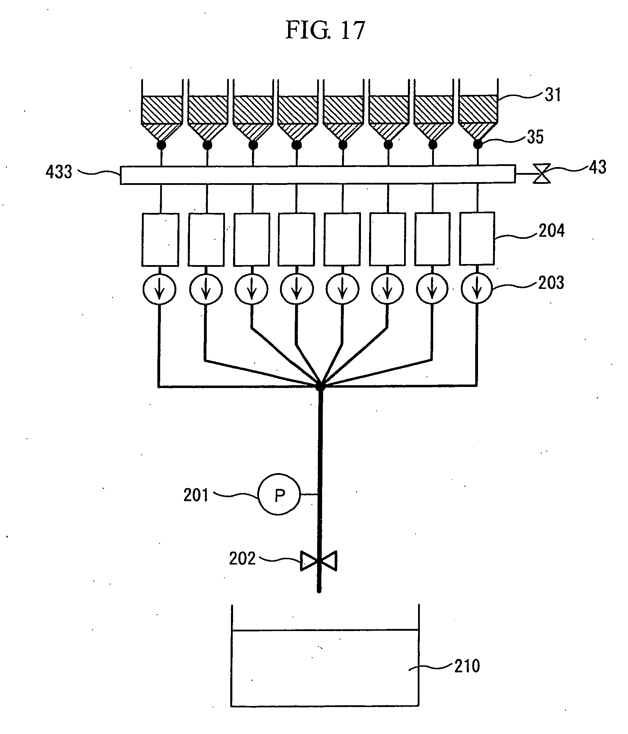

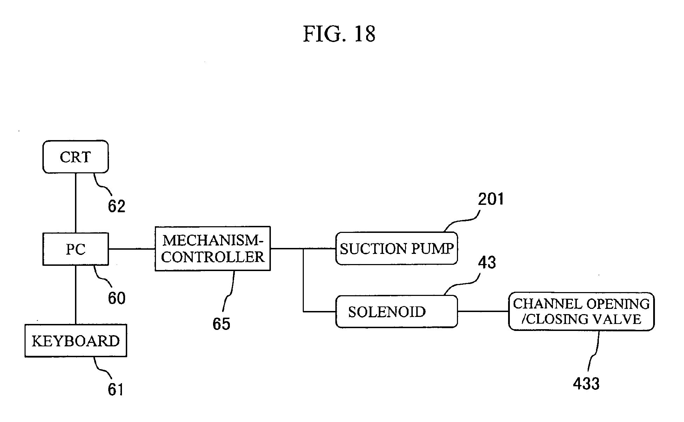

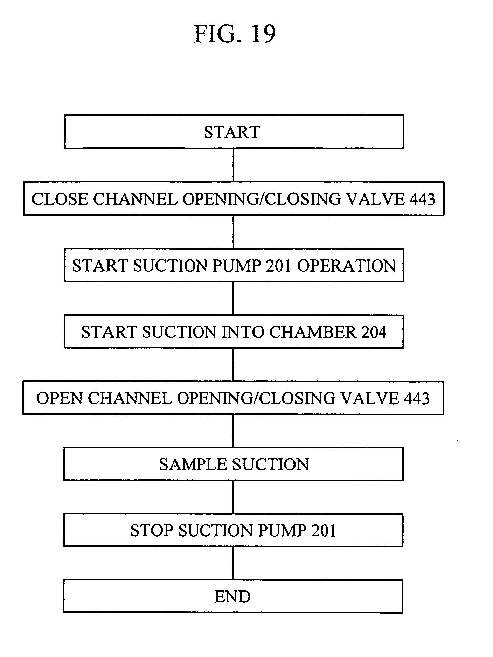

Fig. 17 schematically shows the present embodiment, Fig. 18 shows a block diagram of the present embodiment, and Fig. 19 shows an operation flow diagram. In the following, with reference to Figs. 17 to 19, the features of the present embodiment are described as compared with embodiments 1, 2, and 3.

In the present embodiment, the chambers 204 are separately disposed for a plurality of nucleic acid capturing containers 31. Channels from each chamber 204 are joined into a single channel and the channel is in communication with the suction 201. A channel opening/closing valve 433 for enabling the control of communication is disposed between the nucleic acid capturing container 31 and the chamber 204. Also, a check valve that opens only in the direction leading from the chamber 204 to the suction pump 201 is disposed between the chamber 204 and a location where the channels are joined.

A check valve 203 is a valve generally comprising a spring and a seal member and opens/closes by pressure difference in the channels requiring no motive power. As the check valve 203 structurally opens/closes only by pressure difference in a single direction, a liquid can be caused to flow only in a specific direction. The check valve 203 is characterized in that it does not require a power source while having a function corresponding to the channel-switching valve 33 in embodiment 2. The suction pump 201 and the channel opening/closing valve 433 are controlled via the mechanism controller 65. The following suction operation is conducted.

First, the channel opening/closing valve 443 is closed and the chamber 204 is set in a state where depressurization becomes possible. Then, the inside of each chamber is depressurized by driving the suction pump 201. Thereafter, while the pump unit 201 is being driven, the channel opening/closing valve 433 is opened and the suction of a sample 31 is initiated. Since a liquid flows only in a single direction, the check valve, in this case, can maintain pressure necessary for suction in each channel even if a pressure difference is generated as a result of the characteristics of a sample.

After a lapse of time sufficient for sample suction, the suction pump 201 is halted and the suction operation is finished.

According to the present embodiment, a simple construction of an apparatus can be provided in which sample suction can be conducted using only the control of a suction pump and a channel opening/closing valve.

### INDUSTRIAL APPLICABILITY

An apparatus and a method can be provided by which, when a plurality of liquids with different viscosities are sucked, one operation of liquid suction does not have an influence on other operations of liquid suctions.

## Claims

1. An apparatus for sucking liquid, comprising:
a plurality of liquid suction portions;
a pump mechanism capable of sucking a fluid; and
a switching valve connected to each liquid suction portion and to the pump mechanism, wherein the switching valve causes the pump mechanism to be placed in communication with a specific number of the liquid suction portions, and switches the communication at certain time intervals during liquid suction.

2. The apparatus for sucking liquid according to claim 1, comprising:
a plurality of chambers disposed on channels that connect the plurality of liquid suction portions and the switching valve.

3. The apparatus for sucking liquid according to claim 2, comprising:
a channel opening/closing valve for controlling the communication of a channel that connects the liquid suction portion and the chamber.

4. The apparatus for sucking liquid according to claim 1, wherein a liquid including nucleic acid is sucked, the apparatus comprising:
a plurality of nucleic acid capturing containers communicating individually with the plurality of liquid suction portions, and having a carrier capable of capturing nucleic acid.

5. The apparatus for sucking liquid according to claim 1, wherein
a liquid to be sucked comprises a sample including whole blood, urine, and/or blood serum.

6. The apparatus for sucking liquid according to claim 1, wherein
the switching valve comprises a multiple valve.

7. The apparatus for sucking liquid according to claim 2, wherein
the capacity of the chamber is not less than ten times the volume of a liquid to be sucked.

8. The apparatus for sucking liquid according to claim 2, wherein
a channel that connects the liquid suction portion and the chamber is thinner than a channel that connects the chamber and the switching valve.

9. An apparatus for sucking liquid, comprising:
a plurality of liquid suction portions;
a plurality of chambers individually connecting to each liquid suction portion;
a pump mechanism capable of controlling the pressure of the inside of each chamber;
a first channel opening/closing valve for controlling the communication of channels connecting each liquid suction portion and each chamber; and
a second channel opening/closing valve for controlling the communication of channels connecting each chamber and the pump mechanism.

10. The apparatus for sucking liquid according to claim 9, wherein a liquid including nucleic acid is sucked, the apparatus comprising:
a plurality of nucleic acid capturing containers communicating individually with the plurality of liquid suction portions, and having a carrier capable of capturing nucleic acid.

11. The apparatus for sucking liquid according to claim 9, wherein
the capacity of the chamber is not less than ten times the volume of a liquid to be sucked.

12. An apparatus for sucking liquid, comprising:
a plurality of liquid suction portions;
a plurality of chambers connecting individually to each liquid suction portion;
a pump mechanism capable of controlling the pressure of the inside of each chamber;
a channel opening/closing valve for controlling the opening/closing of channels connecting each liquid suction portion and each chamber; and
a plurality of check valves for passing fluids only in the direction from the chambers to the pump mechanism, the plurality of check valves being disposed on channels that connect each chamber and the pump mechanism.

13. The apparatus for sucking liquid according to claim 12, wherein a liquid including nucleic acid is sucked, the apparatus comprising:
a plurality of nucleic acid capturing containers communicating individually with the plurality of liquid suction portions, and having a carrier capable of capturing nucleic acid.

14. The apparatus for sucking liquid according to claim 12, wherein
the capacity of the chamber is not less than ten times the volume of a liquid to be sucked.

15. A liquid suction method for sucking a liquid from a plurality of liquid suction portions using a pump mechanism capable of sucking a liquid, wherein
while the pump mechanism is being driven, the liquid suction portions placed in communication with the pump mechanism are switched at certain time intervals, whereby a liquid is sucked from each liquid suction portion substantially in a simultaneous manner.

16. The liquid suction method according to claim 15, wherein
a chamber is disposed on channels that individually connect each liquid suction portion and the pump mechanism, the chamber having a capacity not less than ten times the volume of a liquid to be sucked.

17. The liquid suction method according to claim 15, wherein
a channel that connects the liquid suction portion and the chamber is thinner than a channel that connects the chamber and the pump mechanism.

18. The liquid suction method according to claim 15, wherein
a liquid to be sucked comprises a sample including whole blood, urine, and/or blood serum.

19. The liquid suction method according to claim 18, wherein
nucleic acid capturing containers provided with a solid phase capable of capturing nucleic acid are caused to communicate with the plurality of liquid suction portions, and nucleic acid is captured on the solid phase by sucking a liquid from each liquid suction portion.

20. A liquid suction method for sucking a liquid, using a plurality of chambers to individually communicate with a plurality of liquid suction portions, and a pump mechanism capable of controlling the pressure of each chamber, wherein a liquid is sucked from each liquid suction portion, the method comprising the steps of:
blocking each liquid suction portion and each chamber, switching the communication between each chamber and the pump mechanism, and then driving the pump mechanism thereby depressurizing each chamber; and
causing each depressurized chamber to come into communication with each liquid suction portion and sucking a liquid.

21. The liquid suction method according to claim 20, comprising the step of:
in a state such that each liquid suction portion and each chamber are in communication, switching the communication between each chamber and the pump mechanism at certain time intervals, driving the pump mechanism, thereby sucking a liquid from each liquid suction portion.

22. The liquid suction method according to claim 20, wherein
the capacity of the chamber is not less than ten times the volume of a liquid to be sucked.

23. The liquid suction method according to claim 20, wherein
a liquid to be sucked comprises a sample including whole blood, urine, and/or blood serum.

24. The liquid suction method according to claim 20, wherein
nucleic acid capturing containers provided with a solid phase capable of capturing nucleic acid are caused to communicate with the plurality of liquid suction portions, and nucleic acid is captured on the solid phase by sucking a liquid from each liquid suction portion.

25. A liquid suction method for sucking a liquid, using a plurality of chambers to individually communicate with a plurality of liquid suction portions, and a pump mechanism capable of controlling the pressure of each chamber, wherein a liquid is sucked from each liquid suction portion, the method comprising the steps of:
blocking each liquid suction portion and each chamber, and driving the pump mechanism, thereby depressurizing each chamber; and
blocking each chamber and the pump mechanism, and causing each chamber to come into communication with each liquid suction portion, thereby sucking a liquid from each liquid suction portion.

26. The liquid suction method according to claim 23, comprising the step of:
blocking each liquid suction portion and each chamber, causing each chamber to come into communication with the pump mechanism, and driving the pump, thereby sucking a liquid from each chamber.

27. The liquid suction method according to claim 23, wherein
the capacity of the chamber is not less than ten times the volume of a liquid to be sucked.

28. The liquid suction method according to claim 23, wherein
a liquid to be sucked comprises a sample including whole blood, urine, and/or blood serum.

29. The liquid suction method according to claim 26, wherein
nucleic acid capturing containers provided with a solid phase capable of capturing nucleic acid are caused to communicate with the plurality of liquid suction portions, and nucleic acid is captured on the solid phase by sucking a liquid from each liquid suction portion.
